# EUROPÄISCHE PATENTSCHRIFT

(11) **EP 0 988 163 B1**
(45) Veröffentlichungstag und Bekanntmachung des Hinweises auf die Patenterteilung: **26.11.2003**
(21) Anmeldenummer: 98965117.9
(22) Anmeldetag: 14.12.1998
(51) Int. Cl.: B60H 1/00

(54) **MAGNETVENTIL FÜR EINE FLÜSSIGKEITSGEREGELTE HEIZ- UND/ODER KÜHLANLAGE**
MAGNETIC VALVE FOR A LIQUID-CONTROLLED HEATING AND/OR COOLING SYSTEM
ELECTROVANNE POUR SYSTEME DE CHAUFFAGE ET/OU DE REFROIDISSEMENT REGULE PAR LIQUIDE

(30) Priorität: 04.03.1998 DE 19809047
(43) Veröffentlichungstag der Anmeldung: 29.03.2000
(73) Patentinhaber: ROBERT BOSCH GMBH, 70442 Stuttgart (DE)
(72) Erfinder: HESS, Juergen, D-76534 Baden-Baden (DE); PFETZER, Johannes, D-77815 Buehl (DE)
(86) Internationale Anmeldenummer: DE9803663
(87) Internationale Veröffentlichungsnummer: WO99044845

(56) Entgegenhaltungen:
- DE-A- 3 416 465
- DE-A- 4 307 229
- DE-B- 1 025 692
- DE-C- 19 537 067
- FR-A- 2 422 885

## Beschreibung

### Stand der Technik

Die Erfindung geht aus von einem Magnetventil für eine flüssigkeitsgeregelte Heiz- und/oder Kühlanlage mit den Merkmalen des Oberbegriffs von Anspruch 1, wie es aus DE-A-1 025 692 bekannt ist.

Derartige Magnetventile werden insbesondere bei flüssigkeitsgeregelten Wärmetauschern für Heiz- und/oder Klimaanlagen in Kraftfahrzeugen verwendet. Sie können in Abhängigkeit von Temperaturen in der Heiz- und/oder Klimaanlage oder einem Fahrgastraum getaktet angesteuert werden, wobei durch den mittleren Zeitquerschnitt im wesentlichen der Durchfluß bestimmt wird. Durch den Flüssigkeitsdruck und/oder eine Ventilfeder wird das Ventilglied des Magnetventils geöffnet und durch eine erregte Magnetspule des Magnetventils geschlossen, indem sie auf einen mit dem Ventilschaft verbundenen Anker wirkt. Der Raum, in dem der Anker angeordnet ist, ist nicht hermetisch abgedichtet, sondern mit Flüssigkeit gefüllt. Dadurch soll die Bewegung des Ankers hydraulisch gedämpft werden, um ein abruptes Schließen und damit verbundene Druckstöße im Flüssigkeitssystem zu vermeiden. Ferner werden Geräusche sowie Verschleiß verhindert, die entstehen, wenn das Ventilglied ungedämpft auf den Ventilsitz aufschlägt. Die Dämpfungswirkung ist jedoch durch Gasblasen, insbesondere Luftblasen, stark beeinträchtigt, die sich in dem Ankerraum ansammeln, z.B. beim Befüllen des Systems. Ferner können die Magnetventile als Umschaltventile eingesetzt werden, die den Kühlmittelstrom von einer Brennkraftmaschine in der einen Schaltstellung kurzschließen und in einer zweiten Schaltstellung über einen Wärmetauscher leiten.

Es ist aus der DE 195 37 067 C1 bekannt, bei einem Magnetventil, das in einer Vorlaufleitung eines Heizungswärmetauschers angeordnet ist, unter Ausnutzung des Druckgefälles zwischen der Vorlaufleitung und der Rücklaufleitung den Ankerraum des Magnetventils zu durchströmen, um die Luftblasen aus dem Ankerraum zu entfernen und die damit verbundenen Nachteile zu vermeiden. Hierzu ist eine Entlüftungsleitung zwischen dem Ankerraum und der Rücklaufleitung vorgesehen, während über einen Ringspalt zwischen dem Anker und der Spule des Magnetventils Flüssigkeit von einer Vorlaufleitung in die Entlüftungsleitung strömt und verhindert, daß sich im Ankerraum Luftblasen ansammeln.

Es ist ferner aus der DE-PS 34 16 465 bei einem Magnetventil bekannt, einen Ankerraum über einen axialen Kanal in einem Ankerschaft mit einem Leitungsabschnitt zu verbinden, der auf der dem Ankerraum zugewandten Seite des Ventilglieds liegt. Durch die Pumpwirkung des Ankers während der Ventilbetätigung soll Luft aus dem Ankerraum verdrängt und Flüssigkeit angesaugt werden. Wegen der Kompressibilität der Luft findet allerdings nicht immer ein ausreichender Flüssigkeitsaustausch zwischen dem Ankerraum und dem Leitungsabschnitt statt und die Luft kann unter Umständen im oberen, ringförmigen Teil des Ankerraums eingeschlossen bleiben.

### Vorteile der Erfindung

Nach der Erfindung steht der Ankerraum des Magnetventils mit Leitungsabschnitten unterschiedlichen Druckniveaus in Verbindung, so daß der Ankerraum durchflutet und Luft- oder Gasblasen entfernt werden. Da sich die Luftblasen im oberen Bereich des Ankerraums sammeln, ist es zweckmäßig, daß dieser Bereich gut durchflutet wird und der Abfluß in diesem Bereich angeordnet ist. Dabei wird eine Verbindung wie allgemein üblich über Bewegungsspalte zwischen den bewegten Ventilteilen gebildet, während die andere Verbindung über einen axialen Kanal im Ventilschaft hergestellt wird. Bevorzugt wird das Druckgefälle am Ventilglied selbst ausgenutzt, wobei je nach Ventilgestaltung der Zufluß über die axiale Bohrung und der Abfluß über die Spalte erfolgen kann oder umgekehrt. Ferner ermöglicht die erfindungsgemäße Gestaltung kurze Verbindungen ohne zusätzliche Leitungen außerhalb des Ventils und ist sowohl für Ventilanordnungen in der Vorlaufleitung als auch in der Rücklaufleitung des Wärmetauschers anwendbar.

Bei Magnetventilen, bei denen mittels eines zweiten Ventilglieds ein Bypasskanal zwischen dem Zulaufkanal und dem Rücklaufkanal gesteuert wird, ist es zweckmäßig, das Druckgefälle zwischen dem Ablaufkanal und dem Bypasskanal oder dem Rücklaufkanal zu nutzen. Hierzu führt der axiale Kanal im Ventilschaft bis zum Rücklaufkanal oder weist zwischen den zwei Ventilgliedern eine Querbohrung auf, um entweder eine Verbindung zwischen dem Ankerraum und dem Rücklaufkanal oder zwischen dem Ankerraum und dem Zulaufkanal bzw. Bypasskanal herzustellen.

Damit das Magnetventil nicht durch Schmutzpartikel und Ablagerungen im Ankerraum zu stark belastet wird, ist es sinnvoll, die Durchströmung des Ankerraums zu begrenzen, indem der axiale Kanal oder die Querbohrung eine Drosselstelle aufweist oder selbst als Drosselstelle ausgebildet ist. Ferner kann eine Membran vorgesehen werden, die mit einer Dichtlippe an dem Ventilschaft anliegt und so dimensioniert ist, daß sie den Durchfluß durch den Ankerraum bestimmt und im Stillstand verhindert, daß der Ankerraum leerläuft.

Da die Durchflußmenge infolge Leckage durch den Wärmetauscher bei geschlossenem Magnetventil unter einem vorgegebenen Grenzwert gehalten werden muß, ergeben sich unter Umständen so kleine Drosselspalte und Drosselbohrungen, daß diese durch Schmutzpartikel zugesetzt werden können. In diesem Fall ist die Funktion nicht mehr gewährleistet. Nach einer Ausgestaltung der Erfindung wird daher der Durchfluß durch den Ankerraum in Schließstellung des Magnetventils unterbrochen, d.h. soweit eingeschränkt, daß der zulässige Leckagedurchfluß nicht überschritten wird. Hierzu weist das ankerraumseitige Ende des Ventilschafts einen Bund auf, der in Schließstellung des Magnetventils eine Öffnung verschließt, indem er in dieser Position an einem nach innen gerichteten Rand eines Anschlags anliegt, der die Öffnung bildet.

### Zeichnung

In der Zeichnung sind Ausführungsbeispiele der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu sinnvollen Kombinationen zusammenfassen.

Es zeigen:
- Fig. 1: einen Querschnitt durch ein erfindungsgemäßes Magnetventil,
- Fig. 2: ein vergrößertes Detail entsprechend der Linie II in Fig. 1
- Fig. 3: eine Variante mit einem Bypasskanal zwischen einem Zulaufkanal und einem Rücklaufkanal und
- Fig. 4: einen Querschnitt durch ein Magnetventil, das als Umschaltventil eingesetzt ist.

### Beschreibung der Ausführungsbeispiele

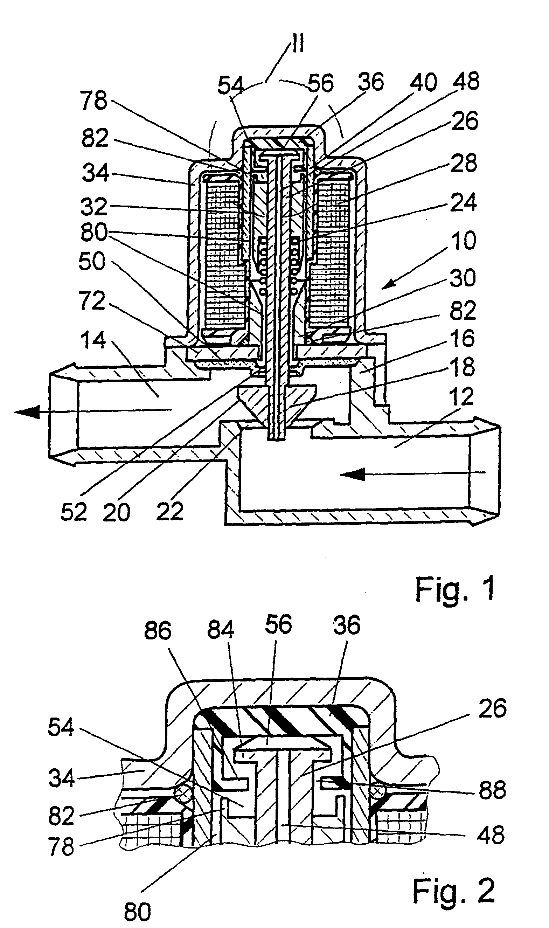

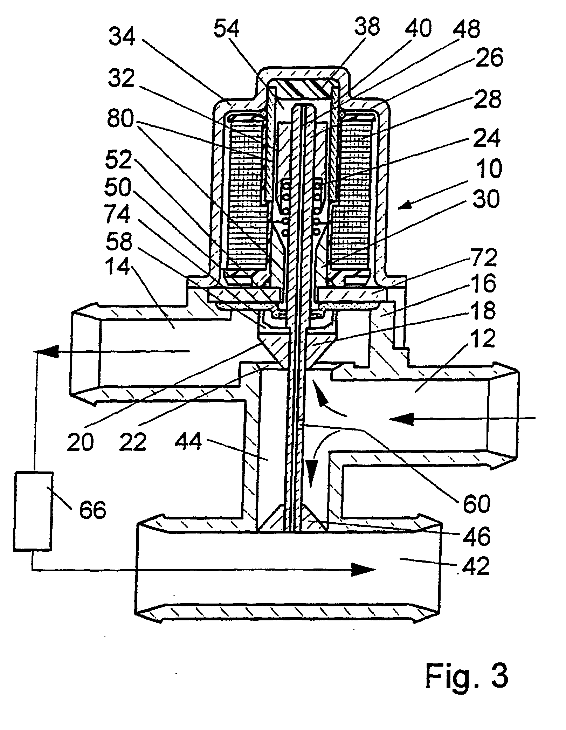

Das Magnetventil 10 nach Fig. 1 und Fig. 3 ist in der Regel zwischen einer Brennkraftmaschine und einem Heizungswärmetauscher in einer Vorlaufleitung angeordnet. Es besitzt einen Zulaufkanal 12, der mit der Brennkraftmaschine verbunden ist und einen Ablaufkanal 14, der mit dem Heizungswärmetauscher 66 verbunden ist. Zwischen den Kanälen 12, 14 ist ein Ventilglied 18 vorgesehen, das über einen Ventilkegel 20 mit einem Ventilsitz 22 in einem Ventilgehäuse 16 zusammenwirkt und in einer ersten Schaltstellung die Verbindung zwischen dem Zulaufkanal 12 und dem Ablaufkanal 14 herstellt und in einer zweiten Schaltstellung, der Schließstellung, sperrt.

Das Ventilglied 18 sitzt auf einem Ventilschaft 26, auf dem ein Anker 32 befestigt ist, der mit einer Magnetspule 28 zusammenwirkt und in einem Ankerraum 54 durch eine Führungsbüchse 40 axial verschiebbar geführt ist. Ein Anschlag 36, an dem der Ventilschaft 26 in geöffneter Stellung des Magnetventils 10 anliegt (Fig. 1), verschließt die Führungsbüchse 40 und damit den Ankerraum 54 stirnseitig. Ein Querkanal 56 am ankerraumseitigen Ende des Ventilschafts 26 stellt die Verbindung auch dann sicher, wenn der Ventilschaft 26 in geöffneter Stellung an dem Anschlag 36 anliegt. Der Anschlag 36 wird zweckmäßigerweise aus einem dämpfenden Kunststoffmaterial hergestellt. Bei der Ausführung nach Fig. 3 stützt sich das Ventilglied 18 in geöffneter Stellung über ein Distanzstück 58 mit Vorsprüngen 74 an einer Membrandichtung 50 ab, die an einer Stützwand 72 anliegt. Durch die Membrandichtung 50 wird der Aufprall gedämpft.

Eine Ventilfeder 24 hält zusammen mit dem Flüssigkeitsdruck im Zulaufkanal 12 das Ventilglied 18 in geöffneter Stellung, solange die Magnetspule 28 nicht erregt ist. Wenn die Magnetspule 28 erregt wird, zieht ein Magnetkern 30, der mit der Platte 72, dem Topf 34 und der Büchse 40 den Magnetkreis bildet, den Anker 32 entgegen der Kraft der Ventilfeder 24 und dem Flüssigkeitsdruck im Zulaufkanal 12 an und das Ventilglied 18 verschließt die Verbindung zwischen dem Zulaufkanal 12 und dem Ablaufkanal 14. Zwischen dem Anker 32 und der Führungsbüchse 40 sowie dem Ventilschaft 26 und dem Magnetkern 30 sind für die freie Bewegung des Ankers 32 und des Ventilschafts 26 Bewegungsspalte 80 vorgesehen, die zumindest zeitweise eine Verbindung zwischen dem Ankerraum 54 und dem Ablaufkanal 14 bilden. Der Ankerraum 54 ist ferner über einen axialen Kanal 48 mit dem Zulaufkanal 12 verbunden (Fig. 1 und 3).

Aufgrund des Druckgefälles zwischen dem Zulaufkanal 12 und dem Ablaufkanal 14, insbesondere in der Schließstellung des Magnetventils 10, strömt Flüssigkeit über den axialen Kanal 48 und die Bewegungsspalte 80 durch den Ankerraum 54 und entfernt dadurch Luft- bzw. Gasansammlungen im Ankerraum 54, so daß stets die gewünschte hydraulische Dämpfung des Magnetventils 10 gewährleistet ist. Der Anker 32 ist axial durch einen Rand 78 verlängert, durch den die Bewegungsspalte 80 bis in den oberen Bereich des Ankerraums 54 reichen.

Der Durchsatz an Flüssigkeit durch den Ankerraum 54 kann durch eine definierte Drosselstelle im axialen Kanal 48 oder in einer Querbohrung 60 (Fig. 3) bestimmt werden, um Ablagerungen von Schmutz zu vermeiden oder die Leckagemenge bei geschlossenem Magnetventil 10 zu begrenzen. Allerdings kann auch der axial Kanal 48 oder die Querbohrung 60 selbst zur Begrenzung des Durchflußes so dimensioniert werden, daß sie als Drosselstellen wirken. Wird der Ankerraum 54 von den Bewegungsspalten 80 zum axialen Kanal 48 durchströmt, können Schmutzteilchen auch durch eine Membrandichtung 50 abgehalten werden, die mit einer Dichtlippe 52 am Ventilschaft 26 anliegt. Die Dichtlippe 52, die bei einer vorgegebenen Druckdifferenz den Durchfluß gestattet, liegt im Stillstand dichtend an und verhindert, daß sich der Ankerraum 54 über die Bewegungsspalte 80 entleert.

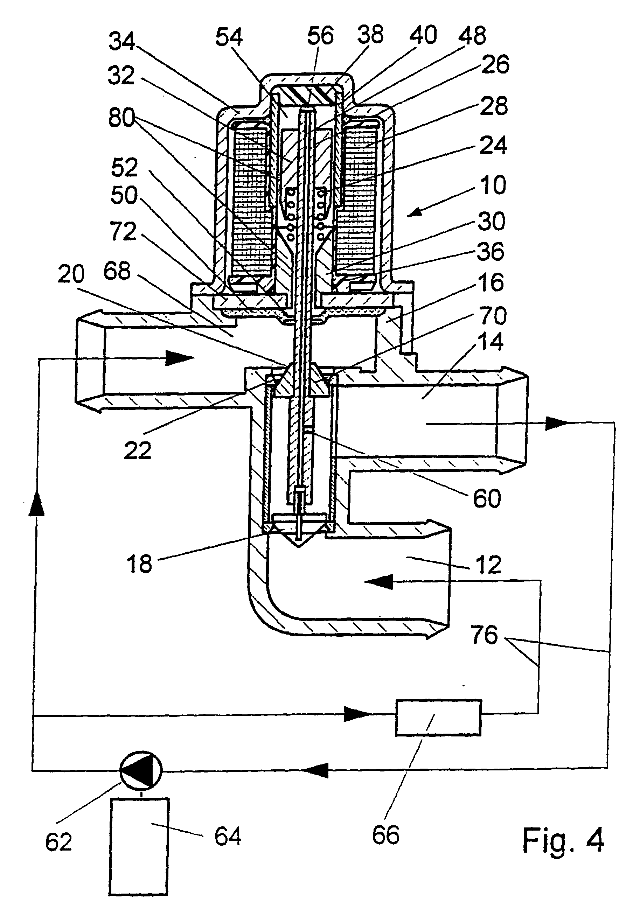

Um die Durchflußwege für die Durchströmung des Ankerraums 54 ausreichend weit dimensionieren zu können, damit sich keine Schmutzpartikel festsetzen und die Durchflußwege verstopfen, und damit trotzdem die Leckagemenge im geschlossenen Zustand des Magnetventils 10 einen zulässigen Wert nicht überschreitet, wird der Durchfluß durch den Ankerraum 54 (Fig. 1) bei geschlossenem Magnetventil 10 unterbrochen. Hierzu weist der Ventilschaft 26 an seinem ankerraumseitigen Ende einen Bund 84 auf. Dieser hat bei geöffnetem Magnetventil 10 einen axialen Abstand zu einem nach innen gerichteten Kragen 86 des Anschlags 36, der eine Öffnung 88 bildet, durch die der Ventilschaft 26 reicht. Der axiale Kanal 48 ist somit bei geöffnetem Magnetventil 10 über den Querkanal 56, die Öffnung 88 und den Ankerraum 54 mit den Bewegungsspalten 80 verbunden. Wird das Magnetventil 10 geschlossen, kommt der Bund 84 an dem Rand 86 zur Anlage und verschließt die Öffnung 88, so daß bei geschlossenem Magnetventil 10 der Durchfluß durch den Ankerraum 54 unterbrochen bzw. soweit beschränkt ist, daß der zulässige Leckagewert nicht überschritten wird. Bei den Ausführungen nach Fig. 3 und Fig. 4 ist ein Anschlag 38 und das entsprechende Ende des Ventilschafts 26 einfacher gestaltet, jedoch ist es auch bei diesen Ausführungen möglich, diese Bauteile entsprechend der Fig. 1 und Fig. 2 auszugestalten.

Die Magnetspule 28 befindet sich in einem Magnettopf 34, der auf einem Ventilgehäuse 16 dichtend befestigt ist. Zur Abdichtung kann die Membrandichtung 50 verwendet werden. Zusätzlich sind Dichtungsringe 82 vorgesehen.

Bei der Ausführung des Magnetventils 10 nach Fig. 3 ist zwischen dem Zulaufkanal 12 und einem Rücklaufkanal 42, der den Rücklauf des Wärmetauschers 66 mit der Brennkraftmaschine verbindet, ein Bypasskanal 44 vorgesehen, der von einem Bypassventilglied 46 gesteuert wird. Dieses sitzt auf dem verlängerten Ventilschaft 26 und öffnet, wenn der Druck im Zulaufkanal 12 auf das Bypassventilglied 46 die Kraft der Ventilfeder 24 übersteigt oder die Magnetspule 28 das Ventilglied 18 schließt. Der axiale Kanal 48 kann durch den ganzen Ventilschaft 26 geführt sein und in den Rücklaufkanal 42 münden. In diesem Fall besteht ein Druckgefälle zwischen dem Ablaufkanal 14 und dem Rücklaufkanal 42, so daß der Ankerraum 54 über die Bewegungsspalte 80 und dann über den axialen Kanal 48 zum Rücklaufkanal 42 durchströmt wird.

Es besteht aber auch eine alternative Möglichkeit darin, daß der axiale Kanal 48 nur bis in den Bereich des Bypasskanals 44 oder des Zulaufkanals 12 reicht und über eine Querbohrung 60 mit dem Bypasskanal 44 oder dem Zulaufkanal 12 verbunden ist. Aufgrund des Druckgefälles zwischen der Querbohrung 60 und dem Ablaufkanal 14 wird der Ankerraum 54 in Richtung Ablaufkanal 14 durchströmt.

Das in Fig. 4 dargestellte Magnetventil 10 ist ein Umschaltventil, das in einer Rücklaufleitung 76 von einem Wärmetauscher 66 zu einer Pumpe 62 angeordnet ist, die von einer Brennkraftmaschine 64 angetrieben ist. Bei ihm hält die Ventilfeder 24 ein Druckventilglied 70 in Schließstellung, so daß die Pumpe 62 Kühlflüssigkeit über den Wärmetauscher 66 zu einem Zulaufkanal 12 des Magnetventils 10 fördert. Die Verbindung zwischen dem Zulaufkanal 12 und dem Ablaufkanal 14 wird von dem Ventilglied 18 gesteuert, das in dem Ventilschaft 26 begrenzt axial beweglich geführt ist. Ist die Magnetspule 28 stromlos, öffnet der Druck im Zulaufkanal 12 das Ventilglied 18 und das Kühlmittel strömt vom Wärmetauscher 66 zur Pumpe 62 zurück. Wird die Magnetspule 28 erregt, öffnet das Druckventilglied 70 und das Ventilglied 18 wird durch den Ventilschaft 26 geschlossen. Dadurch fördert die Pumpe 62 im Kurzschluß über das Magnetventil 10, ohne daß Kühlmittel durch den Wärmetauscher 66 fließt.

Der Ankerraum 54 wird über die Bewegungsspalte 80 und den axialen Kanal 48 durchströmt, der entweder über die Spalte an der Führung des Ventilglieds 18 oder über die Querbohrung 60 mit dem Ablaufkanal 14 verbunden ist.

Die Erfindung ist somit für eine Vielzahl von Ventilvarianten und Ventilanordnungen anwendbar, ohne daß aufwendige Änderungen erforderlich sind.

### Bezugszeichen

- 10: Magnetventil
- 12: Zulaufkanal
- 14: Ablaufkanal
- 16: Ventilgehäuse
- 18: Ventilglied
- 20: Ventilkegel
- 22: Ventilsitz
- 24: Ventilfeder
- 26: Ventilschaft
- 28: Magnetspule
- 30: Magnetkern
- 32: Anker
- 34: Magnettopf
- 36: Anschlag
- 38: Anschlag
- 40: Führungsbüchse
- 42: Rücklaufkanal
- 44: Bypasskanal
- 46: Bypassventilglied
- 48: axialer Kanal
- 50: Membrandichtung
- 52: Dichtlippe
- 54: Ankerraum
- 56: Querkanal
- 58: Distanzstück
- 60: Querbohrung
- 62: Pumpe
- 64: Brennkraftmaschine
- 66: Wärmetauscher
- 68: Anschlußkanal
- 70: Druckventilglied
- 72: Stützwand
- 74: Vorsprung
- 76: Rücklaufleitung
- 78: Rand
- 80: Bewegungsspalt
- 82: Dichtungsring
- 84: Bund
- 86: Rand
- 88: Öffnung

## Patentansprüche

1. Magnetventil (10) für eine flüssigkeitsgeregelte Heiz- und / oder Kühlanlage mit einem mindestens einen Zulaufkanal (12) und mindestens einen Ablaufkanal (14) aufweisenden Ventilgehäuse (16) und einem elektromagentisch-geschalteten Ventilglied (18), das zusammen mit einem Anker (32) auf einem Ventilschaft (26) befestig ist und die Verbindung zwischen dem Zulaufkanal (12) und dem Ablaufkanal (14) in einer Schaltstellung herstellt und in einer Schaltstellung sperrt, wobei der Ventilschaft (26) mit dem Anker (32) in einen Ankerraum (54) taucht, der über Bewegungsspalte (80) mindestens zeitweise von Flüssigkeit durchströmt ist, indem er mit Leitungsabschnitten der Heizund/oder Kühlanlage verbunden ist, die ein unterschiedliches Druckniveau aufweisen, **dadurch gekennzeichnet, dass** der Ankerraum (54) über die Bewegungsspalte (80) mit einem Leitungsabschnitt auf der ihm zugewandten Seite des Ventilglieds (18) verbunden ist und über einen axialen Kanal (48) im Ventilschaft 26 mit einem Leitungsabschnitt auf der von ihm abgewandten Seite des Ventilglieds verbunden ist.

2. Magnetventil (10) nach Anspruch 1, **dadurch gekennzeichnet, daß** der Leitungsabschnitt auf der von dem Ankerraum (54) abgewandten Seite des Ventilglieds (18) der Zulaufkanal (12) ist und die Bewegungsspalte (80) bis in den oberen Bereich des Ankerraums (54) reichen.

3. Magnetventil (10) nach Anspruch 1, **dadurch gekennzeichnet, daß** der Leitungsabschnitt auf der von dem Ankerraum (54) abgewandten Seite des Ventilglieds (18) der Ablaufkanal (14) ist und der axiale Kanal (48) bis in den oberen Bereich des Ankerraums (54) reicht.

4. Magnetventil (10) nach Anspruch 2, **dadurch gekennzeichnet, daß** der Ventilschaft (26) auf der vom Ankerraum (54) abgewandten Seite des Ventilglieds (18) verlängert ist und ein Bypassventilglied (46) trägt, das einen Bypasskanal (44) zwischen dem Zulaufkanal (12) und einem Rücklaufkanal (42) öffnet bzw. sperrt, und daß der axiale Kanal (48) den Ankerraum (54) mit dem Rücklaufkanal (42) verbindet.

5. Magnetventil (10) nach einem der vorhergehenden Ansprüche, **dadurch gekennzeichnet, daß** der axiale Kanal (48) eine Querbohrung (60) aufweist, die die Verbindung zu einem Leitungsabschnitt herstellt.

6. Magnetventil (10) nach einem der vorhergehenden Ansprüche, **dadurch gekennzeichnet, daß** der axiale Kanal (48) oder die Querbohrung (60) eine Drosselstelle aufweist oder als Drosselstelle ausgebildet ist.

7. Magnetventil (10) nach einem der vorhergehenden Ansprüche, **dadurch gekennzeichnet, daß** eine Membrandichtung (50) mit einer Dichtlippe (52) an dem Ventilschaft (26) auf der dem Ankerraum (54) zugewandten Seite des Ventilglieds (18) anliegt, die den Durchfluß durch den Ankerraum (54) begrenzt und ein Leerlaufen des Ankerraums (54) im Stillstand verhindert.

8. Magnetventil (10) nach Anspruch 7, **dadurch gekennzeichnet, daß** das Ventilglied (18) ein Distanzstück (58) aufweist, das in geöffneter Stellung des Ventilglieds (18) die Membrandichtung (50) außerhalb der Dichtlippe (52) gegen eine Stützwand (72) drückt.

9. Magnetventil (10) nach Anspruch 8, **dadurch gekennzeichnet, daß** das Distanzstück (58) am Ventilglied (18) angeformt ist und sich axial erstreckende Vorsprünge (74) aufweist.

10. Magnetventil (10) nach einem der vorhergehenden Ansprüche, **dadurch gekennzeichnet, daß** der Durchfluß durch den Ankerraum (54) in der Schließstellung des Ventilgliedes (18) unterbrochen ist.

11. Magnetventil (10) nach Anspruch 10, **dadurch gekennzeichnet, daß** der Ventilschaft (26) an seinem ankerraumseitigen Ende einen Bund (84) hat, der von einem nach innen gerichteten Rand (86) eines Anschlags (36) umgriffen wird und eine vom Rand (86) gebildete Öffnung (88) schließt, wenn sich das Ventilglied (18) in Schließstellung befindet.

## Claims

1. Solenoid valve (10) for a fluid-controlled heating and/or cooling system, having a valve casing (16) which has at least one inflow duct (12) and at least one outflow duct (14), and having an electromagnetically switched valve element (18) which is mounted, together with an armature (32), on a valve stem (26) and produces the connection between the inflow duct (12) and the outflow duct (14) in one switched position and shuts it off in another switched position, the valve stem (26) dipping with the armature (32) into an armature space (54), through which fluid flows via movement joints (80) for at least some of the time by virtue of the fact that it is connected to line sections of the heating and/or cooling system which have a different pressure level, **characterized in that** the armature space (54) is connected via the movement joints (80) to a line section on the side of the valve element (18) which faces it and is connected via an axial duct (48) in the valve stem (26) to a line section on the side of the valve element which is turned away from it.

2. Solenoid valve (10) according to Claim 1, **characterized in that** the line section on the side of the valve element (18) which is turned away from the armature space (54) is the inflow duct (12), and the movement joints (80) extend into the upper region of the armature space (54).

3. Solenoid valve (10) according to Claim 1, **characterized in that** the line section on the side of the valve element (18) which is turned away from the armature space (54) is the outflow duct (14), and the axial duct (48) extends into the upper region of the armature space (54).

4. Solenoid valve (10) according to Claim 2, **characterized in that** the valve stem (26) is lengthened on the side of the valve element (18) which is turned away from the armature space (54) and is fitted with a bypass valve element (46) which opens and shuts off a bypass duct (44) between the inflow duct (12) and a return duct (42), and **in that** the axial duct (48) connects the armature space (54) to the return duct (42).

5. Solenoid valve (10) according to one of the preceding claims, **characterized in that** the axial duct (48) has a transverse hole (60) which produces the connection to a line section.

6. Solenoid valve (10) according to one of the preceding claims, **characterized in that** the axial duct (48) or the transverse hole (60) has a throttle point or is designed as a throttle point.

7. Solenoid valve (10) according to one of the preceding claims, **characterized in that** a diaphragm seal (50) with a sealing lip (52) bears on the valve stem (26) on the side of the valve element (18) which faces the armature space (54) and which limits the flow through the armature space (54) and prevents the armature space (54) from emptying in the stationary state.

8. Solenoid valve (10) according to Claim 7, **characterized in that** the valve element (18) has a spacer element (58) which, in the opened position of the valve element (18), presses the diaphragm seal (50) outside the sealing lip (52) against a supporting wall (72) .

9. Solenoid valve (10) according to Claim 8, **characterized in that** the spacer element (58) is moulded onto the valve element (18) and has axially extending projections (74).

10. Solenoid valve (10) according to one of the preceding claims, **characterized in that** the flow through the armature space (54) is interrupted in the closed position of the valve element (18).

11. Solenoid valve (10) according to Claim 10, **characterized in that** the valve stem (26) has, at its armature space end, a collar (84) around which an inwardly directed edge (86) of a stop (36) engages, said collar (84) closing an opening (88) formed by the edge (86) when the valve element (18) is in the closed position.

## Revendications

1. Electrovanne (10) pour un système de chauffage et/ou de refroidissement régulé par le liquide comportant au moins un canal d'arrivée (12) et au moins un canal de sortie (14) avec un boîtier de vanne (16) et un organe de soupape (18) à commutation électromagnétique, fixés en commun avec un induit (32) sur une tige de soupape (26), la communication entre le canal d'arrivée (12) et le canal de sortie (14) étant établie dans une position de commutation alors que dans l'autre position de commutation cette liaison est fermée,
la tige de soupape (26) pénétrant avec l'induit (32) dans une chambre d'induit (54), cette chambre étant traversée au moins de temps en temps par du liquide par l'intermédiaire des intervalles de mouvement (80) en étant reliée à des segments de conduite de l'installation de chauffage et/ou de refroidissement, ces segments ayant des niveaux de pression différents,
**caractérisée en ce que**
la chambre d'induit (54) est reliée par les intervalles de mouvement (80) à un segment de conduite sur le côté tourné vers l'élément d'induit (18) et par un canal axial (48) dans la tige de soupape (26) la chambre est reliée à un segment de conduite sur le côté opposé à celui de l'organe d'obturation.

2. Electrovanne (10) selon la revendication 1,
**caractérisée en ce que**
le segment de conduite sur le côté de l'organe de soupape (18) à l'opposé de la chambre de l'induit (54) pour le canal d'arrivée (12) alors que l'intervalle de connexion (80) arrive jusque dans la zone supérieure de la chambre d'induit (54).

3. Electrovanne (10) selon la revendication 1,
**caractérisée en ce que**
le segment de conduite prévu sur le côté de l'organe de soupape (18) à l'opposé de la chambre d'induit (54) est le canal de sortie (14) et le canal axial (48) arrive jusque dans la zone supérieure de la chambre d'induit (54).

4. Electrovanne (10) selon la revendication 2,
**caractérisée en ce que**
la tige de soupape (26) est prolongée du côté de l'organe d'obturation, opposé à la chambre d'induit (54) et porte un élément de soupape de dérivation (46) qui ouvre ou ferme un canal de dérivation (44) entre le canal d'arrivée (12) et un canal de retour (42), et
le canal axial (48) relie la chambre d'induit (54) au canal de retour (42).

5. Electrovanne (10) selon l'une des revendications précédentes,
**caractérisée en ce que**
le canal axial (48) comporte un perçage transversal (60) réalisant une communication avec un segment de conduite.

6. Electrovanne (10) selon l'une quelconque des revendications précédentes,
**caractérisée en ce que**
le canal axial (48) ou le perçage transversal (60) comporte un point d'étranglement ou est réalisé comme point d'étranglement.

7. Electrovanne (10) selon l'une quelconque des revendications précédentes,
**caractérisée par**
un joint à membrane (50) avec une lèvre d'étanchéité (52) prévue sur la tige de soupape (26) contre laquelle s'appuie le côté de l'organe de soupape (18) tourné vers la chambre d'induit (54), et qui limite le passage à travers la chambre d'induit (54) et évite que cette chambre (54) ne se vide à l'arrêt.

8. Electrovanne (10) selon la revendication 7,
**caractérisée en ce que**
l'élément de soupape (18) comporte une pièce d'écartement (58) qui pousse en position d'ouverture de l'élément de soupape (18), le joint à membrane (50) à l'extérieur de la lèvre d'étanchéité (52) contre une paroi d'appui (72).

9. Electrovanne (10) selon la revendication 8,
**caractérisée en ce que**
la pièce d'écartement (58) est formée sur l'élément de soupape (18) et comporte des parties en saillie (74) s'étendant axialement.

10. Electrovanne (10) selon l'une quelconque des revendications précédentes,
**caractérisée en ce que**
le débit à travers la chambre d'induit (54) est interrompu dans la position de fermeture de l'élément de soupape (18).

11. Electrovanne (10) selon la revendication 10,
**caractérisée en ce que**
la tige de soupape (26) comporte une collerette (84) à son extrémité située du côté de la chambre de combustion, cette collerette étant chevauchée par un bord (86) tourné vers l'intérieur et appartenant à une butée (36) et ferme une ouverture (88) formée par le bord (86) si l'organe de soupape ( 18) se trouve en position de fermeture.
